(19) Europäisches Patentamt / European Patent Office / Office européen des brevets

(11) **EP 3 700 097 A1**

(12) **EUROPEAN PATENT APPLICATION**

(43) Date of publication:
26.08.2020 Bulletin 2020/35

(51) Int Cl.:
*H04B 3/32* (2006.01)      *H04B 3/54* (2006.01)

(21) Application number: 19159126.2

(22) Date of filing: 25.02.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
• **GUENACH, Mamoun**
  **1800 Vilvoorde (BE)**
• **STOCKMAN, Gert-Jan**
  **9600 Ronse (BE)**
• **VAN DEN STEEN, Jean**
  **1200 Sint-Lambrechts-Woluwe (BE)**

(74) Representative: **TBK**
**Bavariaring 4-6**
**80336 München (DE)**

(54) **ROBUST HANDSHAKE PROTOCOL FOR COMMUNICATION**

(57) Various example embodiments provides a communication device connectable to a communication line, the communication device comprising a transceiver configured to exchange handshake signals modulated over one or more legacy handshake tones, wherein each legacy handshake tone has a specific legacy handshake frequency; a first converting circuitry configured to operate in a first mode to down-shift signals received from the communication line with a first conversion frequency shift before being supplied to the transceiver, and in a second mode to pass signals received from the communication line transparently to the transceiver without down-shifting the signals received from the communication line; a monitoring circuitry configured to monitor for a handshake related signal; and a control circuitry configured to set the first converting circuitry based on a result of the monitoring circuitry.

Fig. 4

**Description**

Field

Various example embodiments relate to handshaking procedure for broadband copper access technologies, such as Digital Subscriber Line (DSL) or G.fast access technologies.

Background

The present specification generally relates to indoor/in-home broadband wired communications, such as broadband communication over twisted pairs, coaxial cables, or power lines (aka Power Line Communication (PLC)).

Handshake procedure as defined in G.994.1 ITU recommendation is used for exchanging communication capabilities between transceiver units and agreeing on a common mode of operation.

However, due to the uncontrolled inhome cabling (e.g. power cables not being twisted), radio frequency interference (RFI), impulse noises, and/or hardware imperfections, signal to noise ratio (SNR) might be insufficient to carry out the handshake procedure successfully. Further, it is not guaranteed that the deployed DSLAMs/DPUs and CPEs support the same standard handshake profile since no communication is otherwise to be established. It is thus an object of various example embodiments to solve these problems.

Summary

Various exemplary embodiments aim at addressing at least part of the above issues and/or problems and drawbacks.

Various aspects of exemplary embodiments are set out in the appended claims.

According to an exemplary aspect of various example embodiments, there is provided a communication device connectable to a communication line, the communication device comprising a transceiver configured to exchange handshake signals modulated over one or more legacy handshake tones, wherein each legacy handshake tone has a specific legacy handshake frequency; a first converting circuitry configured to operate in a first mode to down-shift signals received from the communication line with a first conversion frequency shift before being supplied to the transceiver, and in a second mode to pass signals received from the communication line transparently to the transceiver without down-shifting the signals received from the communication line; a monitoring circuitry configured to monitor for a handshake related signal; and a control circuitry configured to set the first converting circuitry based on a result of the monitoring circuitry.

According to an exemplary aspect of various example embodiments, there is provided a communication method of a communication device configured to exchange handshake signals modulated over one or more legacy handshake tones, wherein each legacy handshake tone has a specific legacy handshake frequency, the method comprising the steps of, if operating in a first mode, the method comprises down-shifting signals received from a communication line with a first conversion frequency shift before being supplied to a transceiver, and, if operating in a second mode, the method comprises passing signals received from the communication line transparently to the transceiver without down-shifting the signals received from the communication line; the method further comprising monitoring for a handshake related signal; and setting an operation mode based on a result of the monitoring step.

According to an exemplary aspect of various example embodiments, there is provided a communication system comprising at least two communication devices according to any one of the aforementioned device-related exemplary aspects of various example embodiments, wherein a first communication device of the at least two communication devices is operable as or at a distribution point unit and at least one second communication device of the at least two communication devices is operable as or at a customer premises equipment.

Any one of the above aspects enables a reliable and/or efficient communication of handshake signals to thereby solve at least part of the problems and drawbacks identified in relation to the prior art.

Thus, improvement is achieved by devices, methods, and systems enabling/realizing reliable and/or efficient communication of handshake signals over a communication medium.

Devices, methods, and systems are not necessarily limited to handshake signals as used in current DSL or G.fast access technology, but are, generally, applicable to initiation signals similarly modulated over specific tones at respective frequencies and similarly used for initiating a communication session between communication devices.

Brief description of the drawings

In the following, various example embodiments will be described in greater detail by way of non-limiting examples with reference to the accompanying drawings, in which

    Figure 1 is a schematic diagram, illustrating an experimental setup of two DSL lines over power lines (indoor technology example),

    Figure 2 is a bar chart, showing aggregated data rates,

    Figure 3 is a measurement chart of the topology shown in Figure 1, showing a connection between a lower frequency spectrum and crosstalk channels,

Figure 4 is a schematic diagram, illustrating a communication device according to at least some example embodiments,

Figure 5 is a flowchart, illustrating a communication method according to at least some example embodiments,

Figure 6 is a schematic diagram, illustrating a communication system according to at least some example embodiments,

Figure 7 is a schematic diagram, illustrating a shifting of frequency signals for transmission,

Figure 8 is a schematic diagram, illustrating a communication system before a handshake procedure is successfully completed, according to at least some example embodiments,

Figure 9 is a schematic diagram, illustrating the communication system after a handshake procedure is successfully completed, according to at least some example embodiments, and

Figure 10 is a schematic diagram, illustrating a process of shifting frequency signals at a distribution point unit side according to at least some example embodiments.

## Detailed description of drawings and various example embodiments

Various example embodiments are described herein with reference to particular non-limiting examples and to what are presently considered to be conceivable embodiments of various example embodiments. A person skilled in the art will appreciate that the disclosure is by no means limited to these examples, and may be more broadly applied.

It is to be noted that the following description of various example embodiments mainly refers to specifications being used as non-limiting examples for certain exemplary network configurations and deployments. As such, the description of exemplary embodiments given herein specifically refers to terminology, which is directly related thereto. Such terminology is only used in the context of the presented non-limiting examples and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments, in order to, basically, remove a dependency on certain frequency spectrums for communication, there are provided devices, methods, and systems to solve these problems.

Specifically, various example embodiments relate to making a physical layer more robust against some of the detrimental effects that wired networks exhibit. Due to the need for new high-speed indoor broadband communications accommodating ever more indoor traffic over e.g. an indoor power grid, like backhaul of different Wi-Fi access points and transport of internet traffic after the DSL termination, considering the possibilities of reusing broadband copper access technologies as an indoor communication technology is highly essential. Various example embodiments further allow for providing new end-to-end (e2e) solutions towards converged access/home networks.

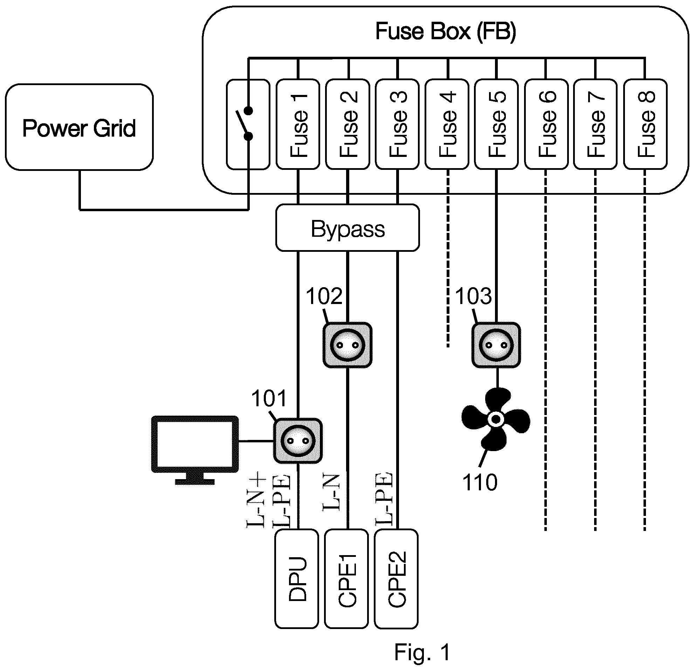

An example of a G.fast deployment as an indoor broadband PLC technology is depicted in Figure 1. As shown in Figure 1, a CPE1 communicates with a DPU via L-N for transmission (line one), wherein CPE2 communicates with the DPU via L-PE for transmission (line two). A bypass fuse (BP-Fuse) can be enabled (E-Fuse) or disabled (regular fuse or R-Fuse). A FAN 110 (which was selected for this example, but other devices may be selected, as well) can be plugged to a first socket 101 (FAN@DPU cable), a second socket 102 (FAN@CPE1 cable), a third socket 103 (FAN@FB5 cable), (or another not shown socket,) or not be plugged to any socket (No-FAN).

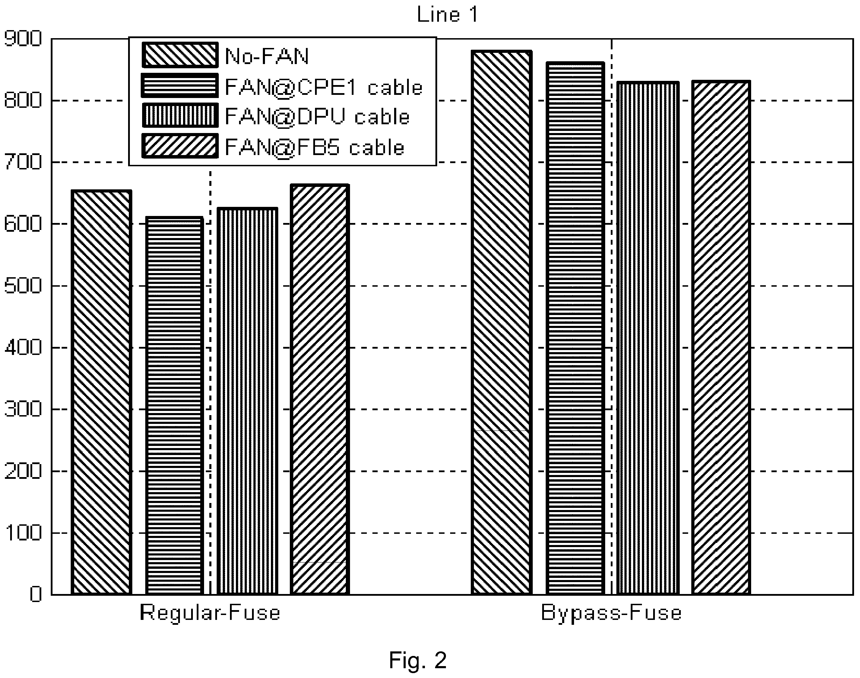

Irrespective of where the FAN is plugged (FAN@DPU cable, FAN@CPE1 cable, FAN@FB5 cable, No-FAN), significant aggregate data rates can be achieved, as shown in Figure 2 (example with 106MHz G.Fast). In the R-Fuse case for line one, for example, an aggregate rate of 500-600 Mbps (left four bars shown in Figure 2) is achieved, which is further boosted by 30% up to 800-900 Mbps (right four bars shown in Figure 2) in the example topology according to Figure 1 in the BP-Fuse case. Such promising rates will even significantly increase with using the 212 MHz G.fast band plan and 424/848 MHz G.mgfast band plans, respectively.

With regard to DSL, a handshake procedure is defined as allowing initial narrowband communication between a CPE and a DPU, in which communication capabilities and link configurations are exchanged, before initialization of a bi-directional communication session and showtime operation. Commonly, the CPE starts with a first general handshake (GHS) transmission to initiate a handshake sequence (this is not strictly always the case, in principle the DPU can initiate the handshake as well). The DPU waits silently, as long as it does not detect said first GHS transmitted by the CPE. GHS profiles, as defined in copper access technologies, rely to a large extent on diagonal dominance of the channels, which is a valid assumption in a lower spectrum for twisted pair access.

However, in conditions where GHS channels are negatively impacted by undesired effects, problems may arise resulting in the DPU to never clearly detect a CPE's initial GHS signaling attempt. This is especially the case in indoor wired networks (powerlines, twisted pairs), since the inhome cabling is typically not a controlled environment (e.g. power cables corresponding to indoor powerline networks are not twisted), therefore, the transmission frequency bands are subject to severe interference in parts of the frequency spectrum, thus severely negatively impacting the CPE's initial GHS signaling attempt.

Regarding Figure 1, the two CPEs (CPE1 and CPE2) may have difficulties in synching with the DPU, or synching may be delayed by multiple of hundreds of seconds. If synching occurs, or if synching occurs after a while, said synching sometimes occurs over crosstalk channels.

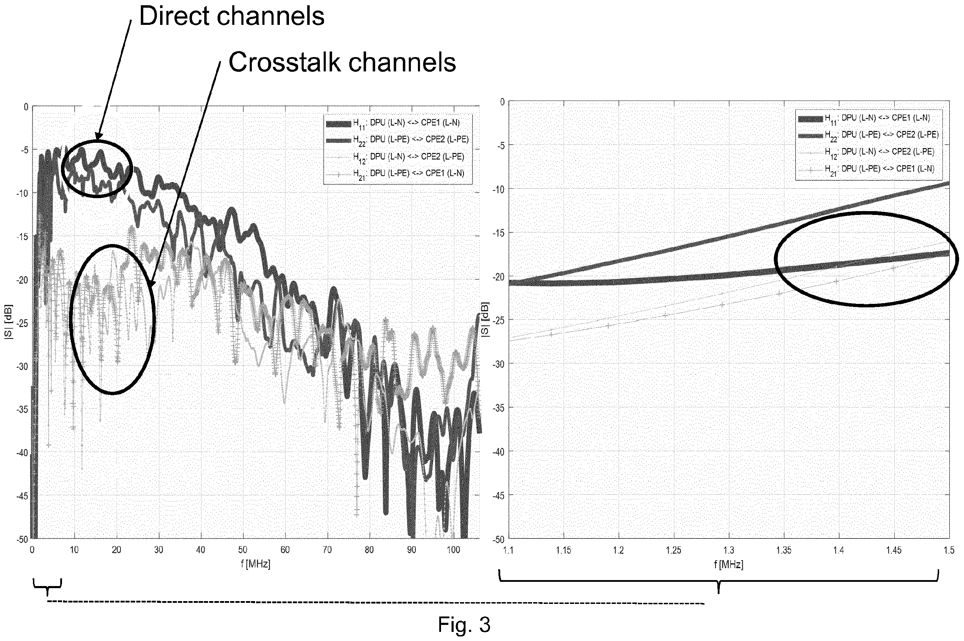

The measurements in Figure 3 illustrate the problem described in Figure 1 in more detail, in that further focus is set on the two channels per cable available, L-PE and L-N. In a frequency range around 10-20 MHz, magnitudes corresponding to the direct channels and magnitudes corresponding to the crosstalk channels are easily to be distinguished due to an offset formed, as derivable from the measurement diagram as shown on the left-hand side of Figure 3. However, magnitudes are not (easy) to be distinguished reliably with increasing frequencies. The problem of magnitudes of the direct channels and the crosstalk channels not to be distinguishable is shown in more detail in the diagram on the right-hand side of Figure 3. Here, at a frequency of about 1.5 MHz, three out of four magnitudes lie within a magnitude portion around -16 dB (the corresponding fourth magnitude lies around -10 dB). The measured frequency dependencies as shown in Figure 3 originate from the power cables corresponding to the indoor powerline network not being twisted.

Particularly, indoor wired channels such as powerlines can be very susceptible during a handshaking procedure to occurring problems affecting the frequency region of the current DSL handshake frequency spectrum. This is especially the case for handshake frequencies below 2 MHz (see right-hand side of Figure 3). As a result, the initialization can be delayed, and synching can sometimes occur over crosstalk channels. Besides in the field, there is no guarantee that CPEs and/or DPUs always support multiple standard DSL handshake profiles including the V43 profile, which would suffer less from these problems.

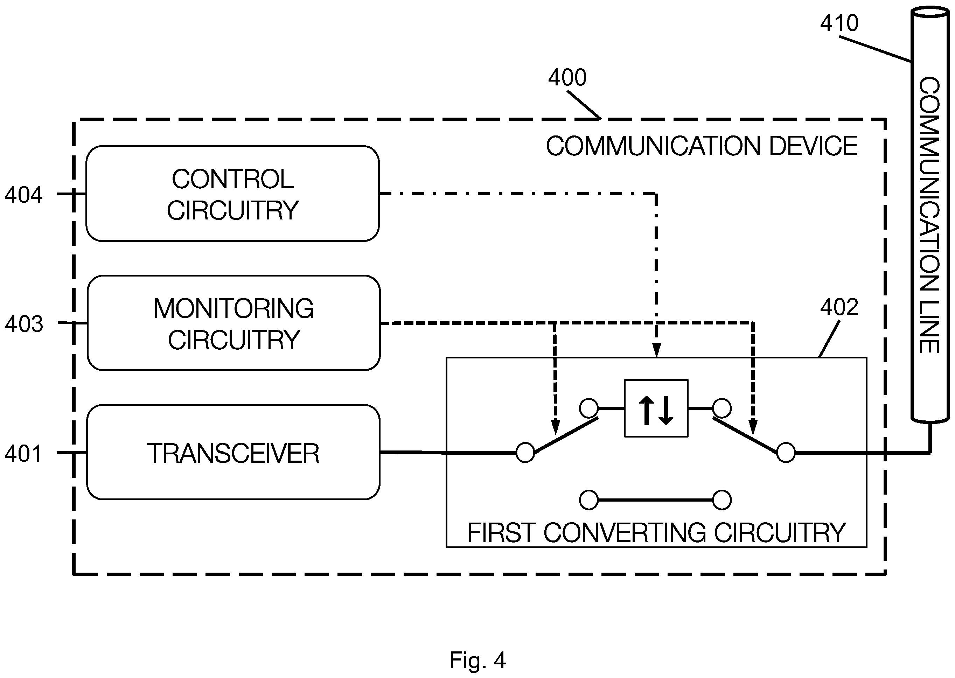

Figure 4 is a schematic diagram, illustrating a communication device 400 according to at least some example embodiments.

In particular, according to Figure 4, a communication device 400 connectable to a communication line 410 is shown, wherein the communication device 400 comprises a transceiver 401, a first converting circuitry 402, a monitoring circuitry 403, and a control circuitry 404.

The transceiver 401 is configured to exchange handshake signals modulated over one or more legacy handshake tones, wherein each legacy handshake tone has a specific legacy handshake frequency. The first converting circuitry 402 is configured to operate in a first mode or in a second mode. In the first mode, the first converting circuitry 402 is configured to down-shift signals received from the communication line 410 with a first conversion frequency shift before being supplied to the transceiver 401. And in the second mode, the first converting circuitry 402 is configured to pass signals received from the communication line 410 transparently to the transceiver 401 without down-shifting the signals received from the communication line 410. The monitoring circuitry 403 is configured to monitor for a handshake related signal. The control circuitry 403 is configured to set the first converting circuitry 402 based on a result of the monitoring circuitry 403.

In an embodiment, at least some of the functionalities of the device shown in Figure 4 may be shared between two physically separate devices forming one operational entity. Therefore, the apparatus may be seen to depict the operational entity comprising one or more physically separate devices for executing at least some of the described processes.

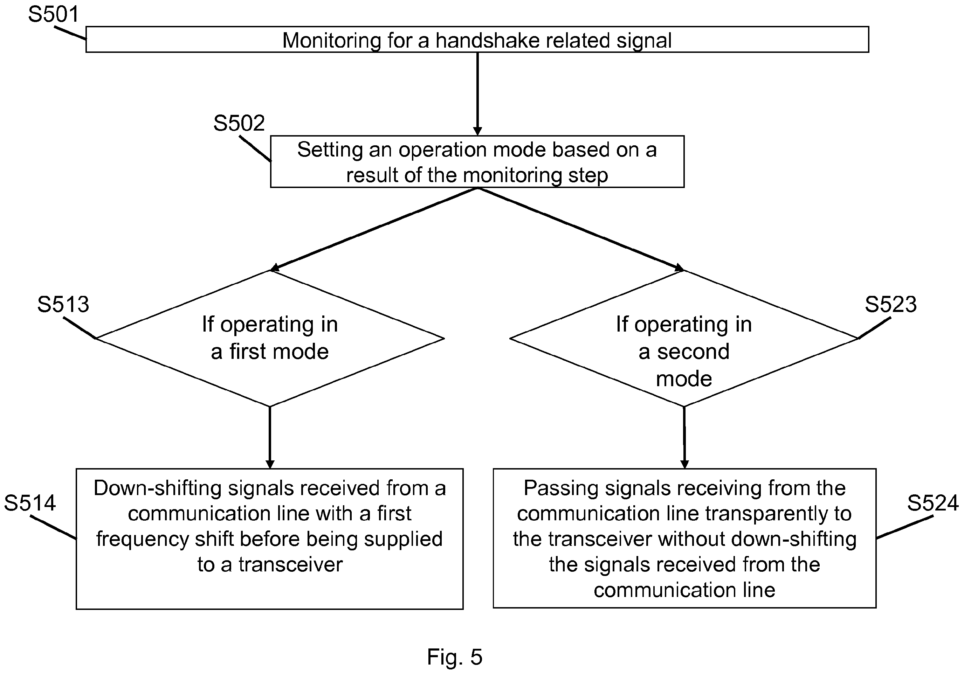

Figure 5 is a flowchart, illustrating a communication method according to at least some example embodiments. The device according to Figure 4 may perform the method of Figure 5 but is not limited to this method. The method of Figure 5 may be performed by the device of Figure 4 but is not limited to being performed by this device.

In particular, according to Figure 5, a communication method of a communication device configured to exchange handshake signals modulated over one or more legacy handshake tones, wherein each legacy handshake tone has a specific legacy handshake frequency, is illustrated, wherein the method comprises monitoring (S501) for a handshake related signal and setting (S502) an operation mode based on a result of the monitoring step.

Wherein, if operating in a first mode (S513), the method comprises down-shifting (S514) signals received from a communication line with a first conversion frequency shift before being supplied to a transceiver, and, if operating in a second mode (S523), the method comprises passing (S524) signals received from the communication line transparently to the transceiver without down-shifting the signals received from the communication line.

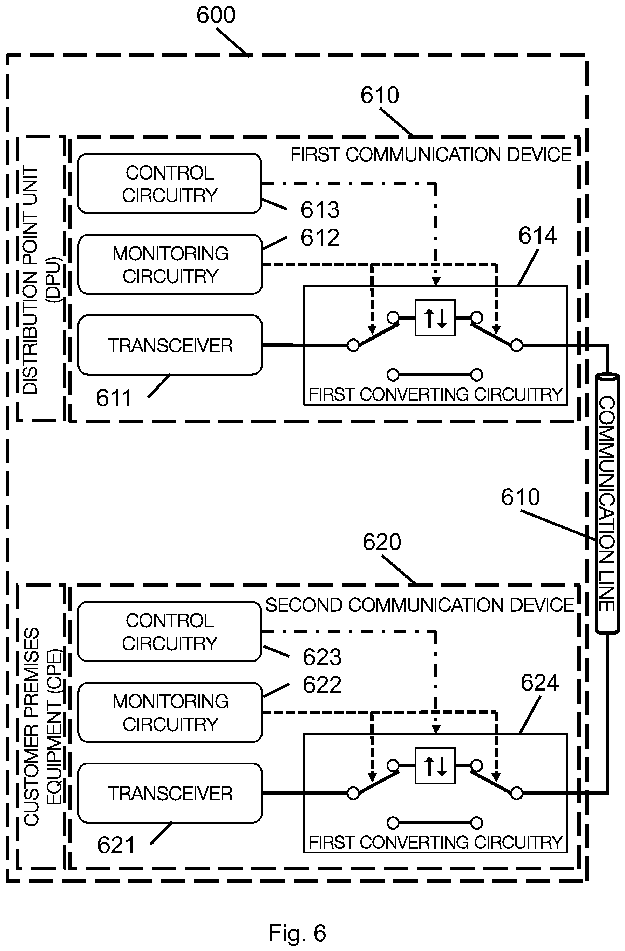

Figure 6 is a schematic diagram, showing a communication system according to at least some example embodiments. The system according to Figure 6 may comprise a device of Figure 4 but is not limited to this device. The device of Figure 4 may be applied by the system of Figure 6 but is not limited to being applied to this system.

In particular, according to Figure 6, a communication system 600 comprises at least two communication devices 610 and 620 according to any one of the aforementioned device-related exemplary aspects of various example embodiments, wherein a first communication device 610 of the at least two communication devices 610 and 620 is operable as or at a distribution point unit and at least one second communication device 620 of the at least two communication devices 610 and 620 is operable as or at a customer premises equipment. The first (second) communication device 610 (620) according to Figure 6 comprises a transceiver 611 (621), a monitoring circuitry 612 (622), a control circuitry 613 (623), and a first converting circuitry 614 (624). Since the first communication device 610 and/or the second communication device 620 can be similar to the communication device 400 according to Figure 4, a further description is omitted herewith.

In the following, further exemplary embodiments are described in relation to the communication device 400 according to Figure 4. However, these exemplary embodiments may also be valid in relation with the aforementioned method and the aforementioned system.

According to various exemplary embodiments, the handshake related signal may be a handshake signal modulated over one or more handshake tones, wherein each handshake tone has a specific shifted frequency, wherein each specific shifted frequency corresponds to a respective specific legacy handshake frequency, which is up-shifted with a first frequency shift. Further, if as a result of the monitoring circuitry 403 the handshake related signal is detected, the control circuitry 404 may be configured to configure the first converting circuitry 402 with the first frequency shift as the first converting frequency shift; and the control circuitry 404 may be configured to set the first converting circuitry 402 in the first mode.

Further, according to various exemplary embodiments, the control circuitry 404 may be configured to iteratively configure the monitoring circuitry 403 with different candidate frequency shifts as the first frequency shift or with different candidate specific shifted frequencies corresponding to respective candidate frequency shifts as the specific shifted frequencies. Further, if as a result of the monitoring circuitry 403 the handshake related signal is detected, the control circuitry 404 may be configured to stop iteratively configuring the monitoring circuitry 403 with the different candidate frequency shifts or the different candidate specific shifted frequencies.

According to various exemplary embodiments, the first converting circuitry 402 may be pre-configured with a first frequency shift as the first conversion frequency shift, and the first converting circuitry 402 is in the first mode. Further, the handshake related signal may be a legacy handshake signal modulated over one or more legacy handshake tones and is supplied from the converting circuitry 402, and wherein, if as a result of the monitoring circuitry 403 the handshake related signal is detected, the control circuitry 404 may be configured to configure the first converting circuitry 402 with the first frequency shift as the first conversion frequency shift.

Further, according to at least some exemplary embodiments, the control circuitry 404 may be configured to iteratively pre-configure the first converting circuitry 402 with different candidate frequency shifts as the first frequency shift, and, if as a result of the monitoring circuitry 403 the handshake related signal is detected, the control circuitry 404 may be configured to stop iteratively pre-configuring the first converting circuitry 402 with the different candidate frequency shifts.

According to at least some exemplary embodiments, the control circuitry 404 may be configured, if the handshake related signal is detected, to detect successful completion of a handshake signaling procedure over the one or more handshake tones, and, if the successful completion of the handshake signaling procedure is detected, to set the first converting circuitry 402 in the second mode.

According to various exemplary embodiments, the communication device 400 may further comprise a second converting circuitry configured to operate in a first mode to up-shift signals from the transceiver 401 with a second frequency shift before being transmitted over the communication line 410, and in a second mode to pass signals from the transceiver 401 transparently to the communication line 410 without up-shifting the signals from the transceiver 401.

According to at least some exemplary embodiments, the second frequency shift may be equal to, or based on, the first frequency shift, and wherein the control circuitry 403 may further be configured to set the second converting circuitry in the first mode if the handshake related signal is detected.

According to various exemplary embodiments, the second frequency shift may be independent from the first frequency shift.

According to at least some exemplary embodiments, the obtained first frequency shift and/or the obtained second frequency shift may be determined based on at least one of prior handshake signaling procedures, which took place over the communication line 410 or another communication line, and channel measurements over the communication line 410 or another communication line, wherein the channel measurements may comprise at least one of path loss measurements (Hlog), and Signal to Noise Ratio (SNR) measurements.

According to various exemplary embodiments, a distribution point unit (DPU) and/or a customer premises equipment (CPE) may comprise the device according to any one of the aforementioned device-related exemplary aspects of various example embodiments.

According to at least some exemplary embodiments, the communication device 400 may be used in a broadband indoor powerline communication network, and/or each up-converted legacy handshake frequency may lie within a usable spectrum, for example the usable DSL spectrum.

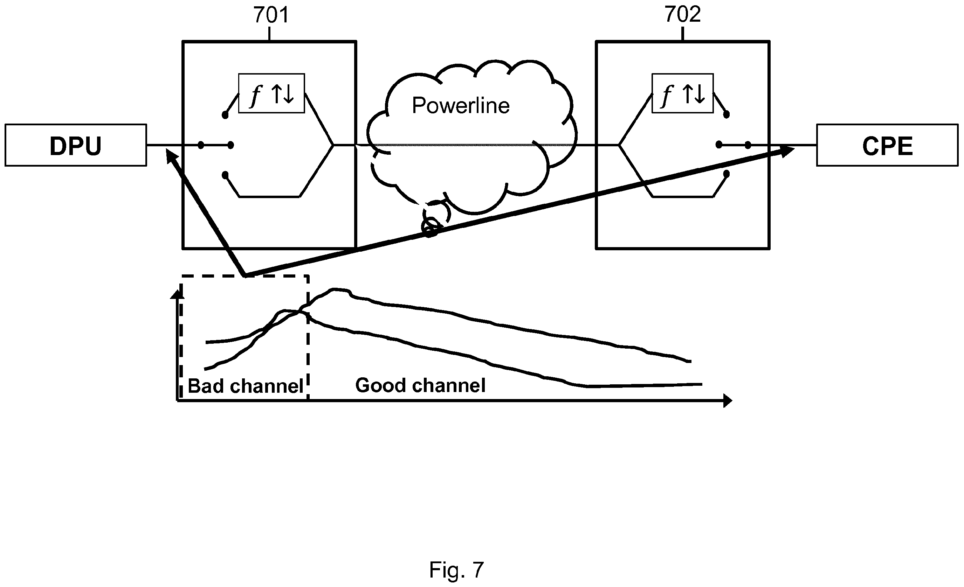

Figure 7 is a schematic diagram, illustrating a shifting of frequency signals for transmission. In particular, Figure 7 illustrates a specific example of communicating shifted frequency signals.

According to various exemplary embodiments, basically, Figure 7 illustrates a basic idea of a DPU and a CPE being connected via a powerline, wherein the DPU transmits/receives a frequency signal to/from a DPU side converting circuitry 701 and the CPE receives/transmits a frequency signal from/to a CPE side converting circuitry 702. That is, the DPU transmits a signal to the DPU side converting circuitry 701, wherein the DPU side converting circuitry 701 up-shifts the signal and transmits the signal to the CPE side converting circuitry 702, wherein the CPE side converting circuitry 702 down-shifts the signal and forwards the signal to the CPE. Transmission from the CPE to the DPU works similarly.

The shifting process is implemented for the following reasons. Namely, the signals being communicated between the DPU and the DPU side converting circuitry 701 (between the CPE and the CPE side converting circuitry 702) comprise frequencies, which are categorized to correspond to a "bad channel". As indicated by the "bad channel" within Figure 7 (keeping in mind the measurement diagram shown in Figure 3), when using frequencies corresponding to the "bad channel", synching over crosstalk channels may occur. Therefore, a converting circuitry receiving a frequency signal, which comprises a frequency corresponding to the "bad channel", up-shifts the signal to a frequency corresponding to a "good channel", so synching over crosstalk channels may not occur when transmitting the up-shifted signal. The up-shifted frequency signal is then communicated between both converting circuitries 701 and 702 via the powerline.

According to at least some exemplary embodiments, further potential implementations of such converting of handshake signals is comprised. Such implementations may comprise an integrated implementation, according to which a communication device (including a converting circuitry) is integrated in a telecom equipment (CPEs and/or DPU), and a plugin implementation, according to which the communication device can be added to existing telecom equipment.

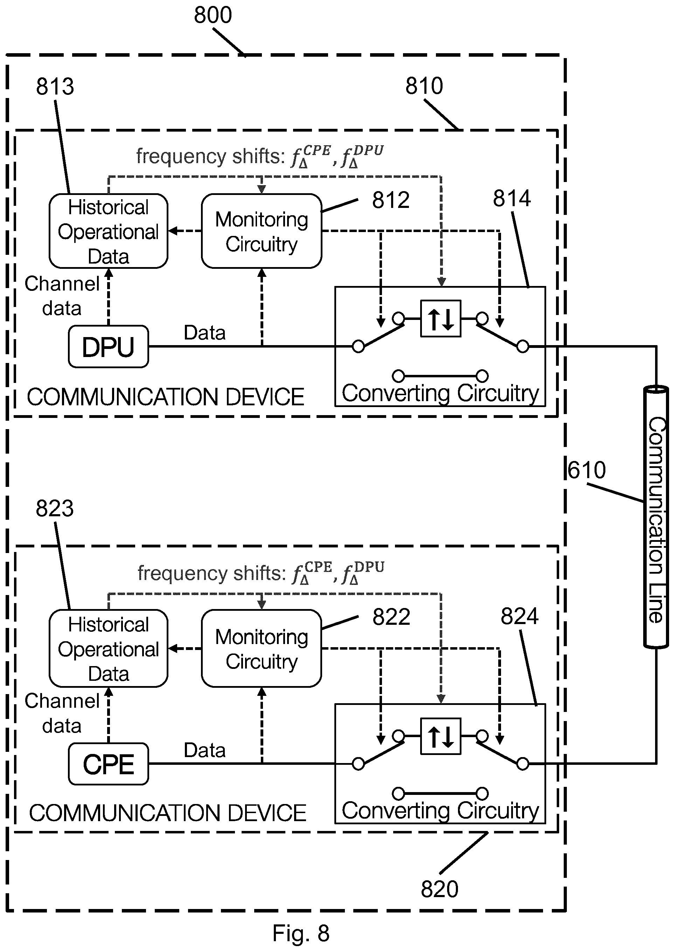

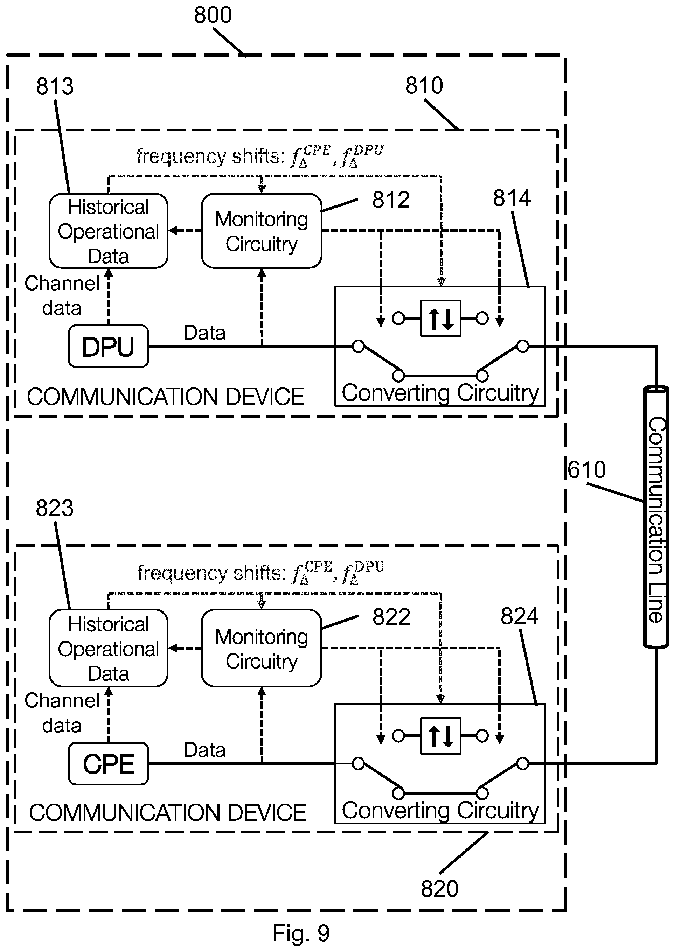

In more specific terms, according to various exemplary embodiments, Figures 8 and 9 illustrate a specific system comprising two specific examples of the communication device 400 according to Figure 4.

According to various exemplary embodiments, Figures 8 and 9 are schematic diagrams showing a system 800 comprising two communication devices 810 and 820, wherein one communication device 810 is connected to a DPU and the other one 820 is connected to a CPE. Further, Figure 8 shows the system 800 before a handshake procedure is successfully completed, and Figure 9 shows the system 800 after the handshake procedure is successfully completed.

It is to be noted that, according to Figure 8, on the DPU side (upper part of Figure 8) the communication device 810 is represented with its respective telecom equipment (DPU), converting circuitry 814, a monitoring circuitry 812, and an analyzing circuitry 813. According to this exemplary embodiment, the analyzing circuitry 813 (which may be comprised by the communication device according to this example, but which may also be an external device connectable to the communication device, such as a network analyzer) collects historical operational data, based on data received from the telecom equipment (DPU) and from the monitoring circuitry 812. The analyzing circuitry 813 further forwards information indicative of frequency shifts for up-shifting and down-shifting ( $f_\Delta^{CPE}$ and $f_\Delta^{DPU}$ ) of frequency signals to the monitoring circuitry 812 and the converting circuitry 814. Further, the monitoring circuitry 812 monitors the communication line 610 at least on a position before a signal arriving over the communication line 610 is down-shifted (by the converting circuitry 814) or on a position before the down-shifted signal is forwarded to the telecom equipment (DPU).

The CPE side (lower part of Figure 8) is configured similarly to the DPU side. That is, at the CPE side, the communication device 820 is represented with its respective telecom equipment (CPE), converting circuitry 824, monitoring circuitry 822, and analyzing circuitry 823. Also, the operations may be similar to the operations at the DPU side. Alternatively, the DPU can be pre-configured with a certain frequency shift, while the CPE can use a try and detect method to determine the applicable frequency shift used by the DPU (or vice-versa).

Specifically, it is to be noted that regarding the system 800 in Figure 8, the converting circuitry 814 at the DPU side and the converting circuitry 824 at the CPE side are in the first mode, that is, frequency signals arriving over the communication line 610 are down-shifted. Contrarily, in Figure 9, the converting circuitry 814 at the DPU side and the converting circuitry 824 at the CPE side are in the second mode, that is, frequency signals arriving over the communication line 610 are bypassed transparently.

According to exemplary embodiments, a sequence of a handshake procedure is summarized as follows, under the assumption that the CPE initiates the handshake sequence (the handshake sequence is initiated at the CPE side).

At the CPE side, frequency shifts for up-shifting and down-shifting (by applying $f_\Delta^{CPE}$ and $f_\Delta^{DPU}$ ) frequency signals are determined and communicated to the monitoring circuitry 822 and the converting circuitry 824. The frequency shifts can be the same or different and may change over time in different handshake attempts within the handshake procedure. It is though preferred to select the same frequency shifts for up-shifting and down-shifting, which can simplify the design of the monitoring circuitry 822 and the converting circuitry 824 (as well as, at the DPU side, the design of the monitoring circuitry 812 and the converting circuitry 814). This step could be done once hence the frequency shifts will not change.

At the CPE side, the monitoring circuitry 822 continuously monitors in the legacy handshake tones bands at a position between the CPE and the converting circuitry 824 (on the CPE side) on the communication line 610. After detection of a CPE side handshake signal modulated over one or more legacy handshake tones, an up-shifting using $f_\Delta^{CPE}$ is triggered before forwarding a modulated CPE side handshake signal over the communication line 610 to a (not shown) DPU handshake processing unit.

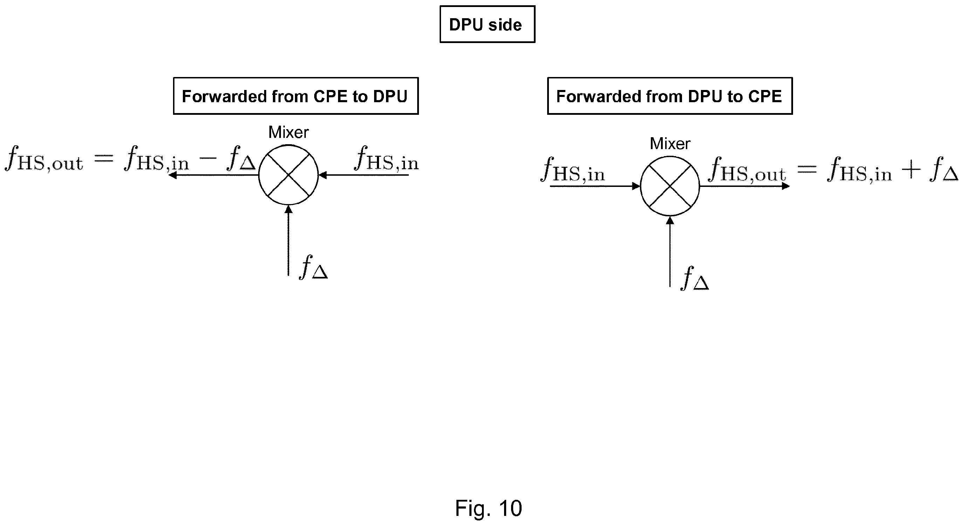

At the DPU side, the monitoring circuitry 812 continuously monitors over the handshake tones bands determined by $f_\Delta^{CPE}$ and/or over the legacy handshake tones. Once the monitoring circuitry 812 detects handshake signals (coming from the CPE side), it immediately down-shifts these signals using a (not shown) mixer comprised by the converting circuitry 814, as depicted (for the DPU side) on the left-hand side in Figure 10. The down-shifted CPE side handshake signal is then forwarded to the DPU.

At the DPU side, after the DPU detects the down-shifted CPE side handshake signal, it sends, in response thereto, a DPU side handshake signal modulated over one or more legacy handshake tones, which is detected by the monitoring circuitry 812 at the DPU side, by monitoring for legacy handshake tones. Then, the converting circuitry 814 up-shifts the handshake signal by using $f_\Delta^{DPU}$ as depicted (for the DPU side) on the right-hand side in Figure 10. The up-shifted DPU side handshake signal is then put on the communication line 610 and forwarded to the CPE and the converting circuitry 824 corresponding to the CPE.

At the CPE side, the DPU side handshake signal is processed similarly as it is outlined above for the DPU side processing the CPE side handshake signal. At the CPE side, after detection of the DPU side handshake signal, the DPU side handshake signal is down-shifted by using $f_\Delta^{DPU}$ and forwarded to the CPE.

The communications during the handshake procedure continues through the up/down-shifting path (see Figure 8) until all the necessary configuration parameters to startup broadband communications are exchanged. Afterwards, the converting circuitry 814 at the DPU side and the converting circuitry 824 at the CPE side are switched to the second operation mode to bypass the up-/down-shifting of frequency signals (see Figure 9). The monitoring circuitry 812 at the DPU side and the monitoring circuitry 822 at the CPE side will switch the converting circuitry 814 at the DPU side and the converting circuitry 824 at the CPE side to a bypass mode once they detect transmission of broadband signals rather than narrowband handshake signals.

Figure 10, as already mentioned above, is a schematic diagram, illustrating a process of shifting frequency signals at the DPU side according to various exemplary embodiments.

In particular, according to Figure 10, on the left-hand side, an incoming handshake signal $f_{HS,in}$ forwarded from a CPE side is down-shifted by applying a frequency shift $f_\Delta$ on the incoming handshake signal. Thus, a signal $f_{HS,out}$ down-shifted in frequency is output and forwarded to the DPU. Contrarily, according to Figure 10, on the right-hand side, an incoming handshake signal $f_{HS,in}$ forwarded from the DPU is up-shifted in frequency, by applying the frequency shift $f_\Delta$, and a signal $f_{HS,out}$ up-shifted in frequency is output and forwarded to the CPE side.

According to various exemplary embodiments, with use of the Frequency Division Duplex (FDD) duplexing handshake protocol, it is preferred to have the same frequency shifts $f_\Delta^{CPE}$ and $f_\Delta^{DPU}$, allowing to use the same converting circuitry for both up- and down-shifting on one side of a communication. However, if a Time Division Duplexing (TDD) duplexing protocol rather than FDD is used, the same converting apparatus can be used, even if $f_\Delta^{CPE}$ differs from $f_\Delta^{DPU}$.

According to at least some exemplary embodiments, different CPEs can be assigned different handshake signal modulated over one or more handshake tones (different up-shifted handshake signals modulated over one or more legacy handshake tones), hence allowing CPEs for simultaneous handshaking with no crosstalk interference. Alternatively, the same handshake tones can be used for all CPEs provided that in the handshake spectrum (set of legacy handshake tones) the channel is diagonally dominant. If simultaneous handshaking is desired, then handshake processing engine can enforce a Time Division Multiple Access (TDMA)-like handshaking protocol.

According to various exemplary embodiments, the initiation of a handshake sequence is triggered by the DPU rather than the CPEs, which is more relevant in indoor powerline communication. Therefore, a controller, such as a vectoring control entity (VCE), can take precautions with respect to the tones that will be affected. The controller controls the timing of a GHS session start, and in the event of pre-defined handshake signals modulated over one or more handshake tones, it further knows deterministically what handshake signal a specific CPE will use for responding. The controller can use online reconfiguration (OLR) commands to restrict the bitloading for a limited amount of time (e.g. equal to the handshake session) or simply limit the bitloading on those tones.

According to at least some exemplary embodiments, in terms of robustness, the monitoring circuitry corresponding to the CPE is preset to a given subset of possible legacy handshake tones (i.e. each CPE has a handshake signature). Thus, cross-handshaking can be solved, by correct pairing of the monitoring circuitries/multipliers at the CPE side with the corresponding set at the DPU side.

According to various exemplary embodiments, rather than using try and error or historical database to select the legacy handshake tones, and in order to improve robustness and speediness, a multiplier can be designed for making multiple copies of legacy handshake tones at once, rather than changing tone sets in a cyclic manner. Such a cyclic scan works, but leads to longer initialization times.

Thus, according to various exemplary embodiments, basically, a reliable handshake procedure can be established with limiting the risk of cross talk channels negatively effecting the handshake procedure.

The above-described procedures and functions may be implemented by respective functional elements, processors, or the like, as described below.

In the foregoing exemplary description of the device, only the circuitries that are relevant for understanding the principles according to at least some embodiments have been described. The device may comprise further circuitries that are necessary for its respective operation. However, a description of these circuitries is omitted in this specification. The arrangement of the circuitries of the device is not construed to limit the disclosure, and the functions may be performed by one circuitry or further split into sub-circuitries.

When in the foregoing description it is stated that the device (or some other circuitry/means) is configured to perform some function, this is to be construed to be equivalent to a description stating that a (i.e. at least one) processor, potentially in cooperation with computer program code stored in a memory of the respective device, is configured to cause the device to perform at least the thus mentioned function. Also, such function is to be construed to be equivalently implementable by specifically configured means for performing the respective function (i.e. the expression "circuitry configured to" is construed to be equivalent to an expression such as "means for").

For the purpose of various example embodiments as described herein above, it should be noted that

- method steps likely to be implemented as software code portions and being run using a processor at a network server or network entity (as examples of devices, apparatuses and/or modules thereof, or as examples of entities including devices and/or modules therefore), are software code independent and can be specified using any known or future developed programming language as long as the functionality defined by the method steps is preserved;

- generally, any method step is suitable to be implemented as software or by hardware without changing the idea of the embodiments and its modification in terms of the functionality implemented;

- method steps and/or devices or circuitries likely to be implemented as hardware components at the above-defined device, or any module(s) thereof, are hardware independent and can be implemented using any known or future developed hardware technology or any hybrids of these;

- devices or circuitries can be implemented as individual devices or circuitries, but this does not exclude that they are implemented in a distributed fashion throughout the system, as long as the functionality of the device or circuitry is preserved.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of various example embodiments. Devices and means can be implemented as individual devices, but this does not exclude that they are implemented in a distributed fashion throughout the system, as long as the functionality of the device is preserved. Such and similar principles are to be considered as known to a skilled person.

Various example embodiments also covers any conceivable combination of method steps and operations described above, and any conceivable combination of devices or circuitries described above, as long as the above-described concepts of methodology and structural arrangement are applicable.

In view of the above, there is provided a communication device connectable to a communication line, the communication device comprising a transceiver configured to exchange handshake signals modulated over one or more legacy handshake tones, wherein each legacy handshake tone has a specific legacy handshake frequency; a first converting circuitry configured to operate in a first mode to down-shift signals received from the communication line with a first conversion frequency shift before being supplied to the transceiver, and in a second mode to pass signals received from the communication line transparently to the transceiver without down-shifting the signals received from the communication line; a monitoring circuitry configured to monitor for a handshake related signal; and a control circuitry configured to set the first converting circuitry based on a result of the monitoring circuitry.

Even though according to at least some embodiments described above with reference to the examples according to the accompanying drawings, it is to be understood that the at least some embodiments are not restricted thereto. Rather, it is apparent to those skilled in the art that various example embodiments can be modified in many ways without departing from the scope of the inventive idea as disclosed herein.

List of acronyms and abbreviations

| | |
|---|---|
| AN: | Access Node |
| BU: | Business Unit |
| CPE: | Customer Premises Equipment |
| DOCSIS: | Data Over Cable Service Interface Specification |
| DPU: | Distribution Point Unit |
| DSL: | Digital Subscriber Lines |
| DSLAM: | Digital Subscriber Line Access Multiplexer |
| e2e: | End-to-End |
| FB: | Fuse Box |
| GHS: | General Handshake |
| HS: | Handshake |
| HW: | Hardware |
| L: | Live |
| N: | Neutral |
| OLR: | Oline reconfiguration |
| P2P: | Point-to-Point |
| PE: | Protective Earth |
| PLC: | Power Line Communication |
| PoC: | Proof of Concept |
| RCD: | Residual-Current-Operated Protective Device |
| RF: | Radio Frequency |
| RFI: | Radio frequency interference |
| TDD: | Time Division Duplexing |
| TDMA: | Time Division Multiple Access |
| UPS: | Uninterrupted Power Supply |
| VCE: | Vectoring Control Entity |

**Claims**

1. A communication device connectable to a communication line, the communication device comprising:

a transceiver configured to exchange handshake signals modulated over one or more legacy handshake tones, wherein each legacy handshake tone has a specific legacy handshake frequency;
a first converting circuitry configured to operate in a first mode to down-shift signals received from the communication line with a first conversion frequency shift before being supplied to the transceiver, and in a second mode to pass signals received from the communication line transparently to the transceiver without downshifting the signals received from the communication line;
a monitoring circuitry configured to monitor for a handshake related signal; and
a control circuitry configured to set the first converting circuitry based on a result of the monitoring circuitry.

2. The communication device according to claim 1, wherein
the handshake related signal is a handshake signal modulated over one or more handshake tones, wherein each handshake tone has a specific shifted frequency, wherein each specific shifted frequency corresponds to a respective specific legacy handshake frequency which is up-shifted with a first frequency shift; wherein

if as a result of the monitoring circuitry the handshake related signal is detected, the control circuitry is configured to configure the first converting circuitry with the first frequency shift as the first converting frequency shift; and
the control circuitry is configured to set the first converting circuitry in the first mode.

3. The communication device according to claim 2, wherein
the control circuitry is configured to iteratively configure the monitoring circuitry with different candidate frequency shifts as the first frequency shift or with different candidate specific shifted frequencies corresponding to respective candidate frequency shifts as the specific shifted frequencies, and
if as a result of the monitoring circuitry the handshake related signal is detected,
the control circuitry is configured to stop iteratively configuring the monitoring circuitry with the different candidate frequency shifts or the different candidate specific shifted frequencies.

4. The communication device according to claim 1, wherein
the first converting circuitry is pre-configured with a first frequency shift as the first conversion frequency shift,
the first converting circuitry is in the first mode,
the handshake related signal is a legacy handshake signal modulated over one or more legacy handshake tones and is supplied from the converting circuitry; and wherein
if as a result of the monitoring circuitry the handshake related signal is detected,
the control circuitry is configured to configure the first converting circuitry with the first frequency shift as the first conversion frequency shift.

5. The communication device according to claim 4, wherein
the control circuitry is configured to iteratively pre-configure the first converting circuitry with different candidate frequency shifts as the first frequency shift, and
if as a result of the monitoring circuitry the handshake related signal is detected,
the control circuitry is configured to stop iteratively pre-configuring the first converting circuitry with the different candidate frequency shifts.

6. The communication device according to any of claims 1 to 5, wherein the control circuitry is configured,
if the handshake related signal is detected,
to detect successful completion of a handshake signaling procedure over the one or more handshake tones, and
if the successful completion of the handshake signaling procedure is detected,
to set the first converting circuitry in the second mode.

7. The communication device according to any of claims 1 to 6, wherein the communication device further comprises a second converting circuitry configured to operate in a first mode to up-shift signals from the transceiver with a second frequency shift before being transmitted over the communication line, and in a second mode to pass signals from the transceiver transparently to the communication line without up-shifting the signals from the transceiver.

8. The communication device according to claim 7, wherein the second frequency shift is equal to, or based on, the first frequency shift, and wherein the control circuitry is further configured to set the second converting circuitry in the first mode if the handshake related signal is detected.

9. The communication device according to claim 7, wherein the second frequency shift is independent from the first frequency shift.

10. The communication device according to any of claims 1 to 9, wherein the communication device is configured to obtain configuration information indicative of the first frequency shift and/or the second frequency shift.

11. The communication device according to claim 10, wherein the obtained first frequency shift and/or the obtained second frequency shift is determined based on at least one of:

- prior handshake signaling procedures which took place over the communication line or another communication line; and
- channel measurements over the communication line or another communication line, wherein the channel measurements comprise at least one of:

    - path loss measurements (Hlog); and
    - Signal to Noise Ratio (SNR) measurements.

12. A distribution point unit comprising the communication device according to any of claims 1 to 11 or a customer premises equipment comprising the communication device according to any of claims 1 to 11.

13. The communication device according to any of claims 1 to 12, wherein
the communication device is used in a broadband indoor powerline communication network; and/or
each up-converted legacy handshake frequency lies within a usable spectrum.

14. A communication method of a communication device configured to exchange handshake signals modulated over one or more legacy handshake tones, wherein each legacy handshake tone has a specific legacy handshake frequency, the method comprising the steps of:

    if operating in a first mode, the method comprises down-shifting signals received from a communication line with a first conversion frequency shift before being supplied to a transceiver, and if operating in a second mode, the method comprises passing signals received from the communication line transparently to the transceiver without down-shifting the signals received from the communication line;
    the method further comprising:

        monitoring for a handshake related signal; and
        setting an operation mode based on a result of the monitoring step.

15. A communication system comprising at least two communication devices according to any of claims 1 to 13, wherein a first communication device of the at least two communication devices is operable as or at a distribution point unit and at least one second communication device of the at least two communication devices is operable as or at a customer premises equipment.

Fig. 1

Fig. 2

EP 3 700 097 A1

Fig. 3

Fig. 4

S501

Monitoring for a handshake related signal

S502

Setting an operation mode based on a result of the monitoring step

S513 — If operating in a first mode

S523 — If operating in a second mode

S514 — Down-shifting signals received from a communication line with a first frequency shift before being supplied to a transceiver

S524 — Passing signals receiving from the communication line transparently to the transceiver without down-shifting the signals received from the communication line

Fig. 5

Fig. 6

Fig. 7

EP 3 700 097 A1

**800**

**810**

**813**

frequency shifts: $f_\Delta^{CPE}, f_\Delta^{DPU}$

Historical Operational Data

Monitoring Circuitry **812**

**814**

Channel data

DPU — Data

Converting Circuitry

COMMUNICATION DEVICE

**610** Communication Line

**823**

frequency shifts: $f_\Delta^{CPE}, f_\Delta^{DPU}$

Historical Operational Data

Monitoring Circuitry **822**

**824**

Channel data

CPE — Data

Converting Circuitry

COMMUNICATION DEVICE

**820**

Fig. 8

800

813

810

frequency shifts: $f_\Delta^{CPE}, f_\Delta^{DPU}$

Historical Operational Data

Monitoring Circuitry

812

814

Channel data

DPU

Data

COMMUNICATION DEVICE

Converting Circuitry

610

Communication Line

823

frequency shifts: $f_\Delta^{CPE}, f_\Delta^{DPU}$

Historical Operational Data

Monitoring Circuitry

822

824

Channel data

CPE

Data

COMMUNICATION DEVICE

Converting Circuitry

820

Fig. 9

Forwarded from CPE to DPU

Mixer

$$f_{\mathrm{HS,out}} = f_{\mathrm{HS,in}} - f_\Delta \qquad f_{\mathrm{HS,in}}$$

$$f_\Delta$$

Forwarded from DPU to CPE

Mixer

$$f_{\mathrm{HS,in}} \qquad f_{\mathrm{HS,out}} = f_{\mathrm{HS,in}} + f_\Delta$$

$$f_\Delta$$

Fig. 10

Europäisches
Patentamt

European
Patent Office

Office européen
des brevets

## EUROPEAN SEARCH REPORT

Application Number

EP 19 15 9126

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/18102 A1 (SASKTEL [CA]; CRUDER OLIVER [CA]; LABBE SAMUEL MARK [CA]) 30 March 2000 (2000-03-30) | 1,12-15 | INV. H04B3/32 H04B3/54 |
| A | * page 6 - page 8; figures 1,2 * | 2-11 | |
| A | EP 2 942 933 A1 (ADTRAN GMBH [DE]) 11 November 2015 (2015-11-11) * the whole document * | 1-15 | |

TECHNICAL FIELDS
SEARCHED (IPC)

H04B
H04L

The present search report has been drawn up for all claims

| Place of search | Date of completion of the search | Examiner |
|---|---|---|
| The Hague | 22 March 2019 | D'Alessandro, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 9126

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2019

| Patent document cited in search report | | Publication date | Patent family member(s) | | Publication date |
|---|---|---|---|---|---|
| WO 0018102 | A1 | 30-03-2000 | AU<br>CA<br>WO | 5724299 A<br>2330706 A1<br>0018102 A1 | 10-04-2000<br>30-03-2000<br>30-03-2000 |
| EP 2942933 | A1 | 11-11-2015 | EP<br>US | 2942933 A1<br>2015319312 A1 | 11-11-2015<br>05-11-2015 |

EPO FORM P0459

For more details about this annex : see Official Journal of the European Patent Office, No. 12/82